# EUROPÄISCHE PATENTSCHRIFT

(11) **EP 3 567 295 B1**
(45) Veröffentlichungstag und Bekanntmachung des Hinweises auf die Patenterteilung: **28.06.2023**
(21) Anmeldenummer: 19167275.7
(22) Anmeldetag: 04.04.2019
(51) Int. Cl.: F16L 55/07, F16L 55/09, F16T 1/45, F24H 8/00, F24H 9/16, F16T 1/22

(54) **SIPHON**
SIPHON
SIPHON

(30) Priorität: 08.05.2018 DE 102018110984
(43) Veröffentlichungstag der Anmeldung: 13.11.2019
(73) Patentinhaber: Vaillant GmbH, 42859 Remscheid (DE)
(72) Erfinder: Gaisbauer, Norbert, 42799 Leichlingen (DE); Birrenbach, Axel, 42855 Remscheid (DE); Reinert, Andreas, 58455 Witten (DE)
(74) Vertreter: Popp, Carsten

(56) Entgegenhaltungen:
- EP-A1- 1 696 165
- DE-A1- 19 923 546
- DE-A1-102009 011 516
- DE-U1-202008 013 120
- US-A- 4 627 460
- US-A1- 2017 016 573

## Beschreibung

Die Erfindung bezieht sich auf einen Siphon.

Ein Siphon ist ein geruchs- beziehungsweise gasdichter, jedoch flüssigkeitsdurchlässiger Verschluss von Rohrsystemen und Gefäßen. Das Funktionsprinzip beruht auf einer vertikalen Umlenkung, deren untere Umlenkung stets mit Flüssigkeit gefüllt bleibt und damit den Durchlass von Gasen verhindert.

Bei Heizgeräten mit Brennwertnutzung entsteht bei der Abkühlung des Abgases aus dem enthaltenen Wasserdampf Kondensat. Das Kondensat muss abgeführt werden, wobei darauf zu achten ist, dass aus der Kondensatleitung kein Abgas entweichen kann. Üblicherweise werden daher Kondensatsiphons in der Kondensatleitung eingesetzt. Typischerweise werden Kondensatsiphons eingesetzt, welche über eine Wassersäule den Kondensatablauf luftdicht verschließen, damit kein Abgas in den Aufstellungsraum entweichen kann. Bei Brennwertgeräten gemäß dem Stand der Technik herrscht hier im Betrieb Überdruck. Dementsprechend muss ein Ausblasen verhindert werden. Ferner muss vermieden werden, dass bei längeren Stillstandzeiten das Kondensat im Kondensatsiphon verdunstet, da ansonsten der Kondensatsiphon austrocknet.

An derartige Siphons werden zur Kondensatabfuhr häufig Wellschläuche angeschlossen. Es hat sich herausgestellt, dass diese Schläuche manchmal entgegen den Installationsvorschriften, welche ein stetiges Gefälle von mindestens 4° vorsehen, nicht monoton fallend installiert werden. Vielmehr kommt es manchmal vor, dass der Schlauch wieder signifikant ansteigt und somit durch das in einem Bogen angesammelte Kondensat einen zweiten Siphon schafft, so dass zwischen dem Kondensatsiphon und dem durch den Schlauch gebildeten Siphon ein Luftvolumen eingeschlossen ist, dessen Gasdruck der Wassersäule im Siphon entspricht. Durch den so entstandenen zweiten Siphon, erhöht sich die benötigte Wassersäule für das Gerätesiphon, um die zusätzlich gebildete Wassersäule im Schlauch zu verdrängen. Übersteigt die Oberkannte der zusätzlich benötigten Wassersäule im Gerät beispielsweise die Position der Zündelektrode, so kommt es zu Funktionsstörung des Gerätes.

Bei Siphons mit bewegten Teilen, wie beispielsweise aus EP 2910867 B1 bekannt, kann es vorkommen, dass ein Unterdruck stromab des Siphons zu einem Verschließen des Siphons führt, so dass nachströmendes Kondensat nicht abgeführt werden kann, so dass es ebenfalls letztendlich zu einer Funktionsstörung kommt.

Aus der Patentanmeldung DE 199 23 546 A1 ist ein Siphon mit einem Stutzen bekannt, mit dem der Siphon manuell von außen mit Wasser befüllt werden kann.

Die Gebrauchsmusterschrift DE 20 2008 013 120 U1 offenbart einen Siphon für ein Heizgerät. Auf der Auslassseite des Siphons ist eine Entlüftungsöffnung mit einer Verbindung zur Unterdruckseite eines Gebläses vorgesehen. Dadurch soll verhindert werden, dass bei einem z.B. nach Stillstand ausgetrockneten Siphon während der Zeit, in der der Siphon mit Kondensat gefüllt wird, Abgase in den Aufstellraum gelangen.

Aufgabe der Erfindung ist daher, einen Kondensatablauf auch bei fehlerhafter Installation der Kondensatabflussleitung zu gewährleisten.

Diese Aufgabe wird erfindungsgemäß mit einem Siphon mit den Merkmalen des unabhängigen Anspruchs 1 gelöst. Vorteilhafte Ausgestaltungen ergeben sich gemäß den Merkmalen der abhängigen Ansprüche.

Die Erfindung wird anhand der Figuren näher erläutert. Hierbei zeigen:
Figur 1 einen ersten erfindungsgemäßen Siphon und
Figur 2 einen zweiten erfindungsgemäßen Siphon.

Gleiche Bezugszeichen stehen für die gleichen Bauteile.

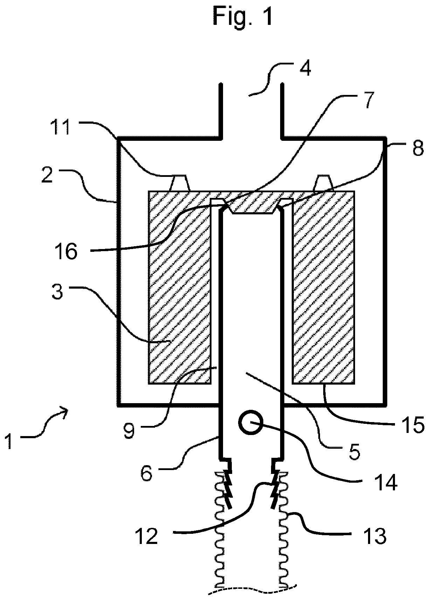

Figur 1 zeigt einen Kondensatsiphon 1 mit einem Kondensatbehälter 2, mit einem Kondensatzulauf 4 im oberen Bereich des Kondensatbehälters 2 sowie einem Kondensatablauf 6 im unteren Bereich des Kondensatbehälters 2. Die Wegstrecke vom Kondensatzulauf 4 bis zum Kondensatablauf 6 bildet die Flüssigkeitsführung. Innerhalb des Kondensatbehälters 2 erstreckt sich ein lineares Steigrohr 5 in vertikaler Richtung, das in den Kondensatablauf 6 übergeht und im Kondensatbehälter 2 mit einer Mündung 8 am oberen Rand endet. Die Mündung 8 ist zugleich die Unterkante 16 der höchsten Stelle der Flüssigkeitsführung. Ein Schwimmer 3 mit einer zylindrischen Ausnehmung ist innerhalb des Kondensatbehälters 2 derart angeordnet, dass er das Steigrohr 5 mit einem Spalt 9 umschließt. Die Unterkante des Schwimmers 3 bildet zugleich die Oberkante 15 der niedrigsten Stelle der Flüssigkeitsführung. Im Spalt 9 befinden sich optional nicht dargestellte Abstandshalter zur Führung. Diese Abstandshalter können außen am Steigrohr 5, innen in der zylindrischen Ausnehmung, an den Seitenwänden oder auf dem Boden des Kondensatbehälters 2 angeordnet sein. Der Schwimmer 3 verfügt auf seiner Oberseite über Anschlagbolzen 11. In der Ausnehmung des Schwimmers 3 befindet sich oben eine zur Mündung 8 korrespondierende, kegelstumpfförmige Dichtfläche 7. Die Ausnehmung des Schwimmers 3 ist kürzer als das Steigrohr 5, so dass ohne Kondensat der Schwimmer 3 auf dem Steigrohr 5 aufliegt und somit verschließt. Der Schwimmer 3 bildet in Verbindung mit dem Kondensatbehälter 2 mit Steigrohr 5 einen Siphon mit definierter Sperrhöhe. Die Flüssigkeitsführung wird in Abhängigkeit der Schwimmhöhe des Schwimmers 3 gebildet.

Am unteren Ende des Kondensatablaufs 6 befindet sich eine Wellrohrverrastung 12, welche mit einem Wellrohr 13 verbunden ist. Oberhalb der Wellrohrverrastung 12 ist in dem Kondensatablauf 6 eine Entlüftungsvorrichtung 14 angeordnet. Die Entlüftungsvorrichtung 14 ist aus einem porösem Sinterkunststoff, vorzugsweise porösem Sinterpolyethylen und / oder Sinterpolypropylen hergestellt.

Über die Entlüftungsvorrichtung 14 kann Gas entweichen oder zuströmen. Herrscht in diesem Bereich gegenüber der Umgebung Unter- oder Überdruck, so kann durch eine Gasströmung ein Druckausgleich erfolgen. Die Entlüftungsvorrichtung 14 ist jedoch kondensatdicht, so dass kein Kondensat entweichen kann.

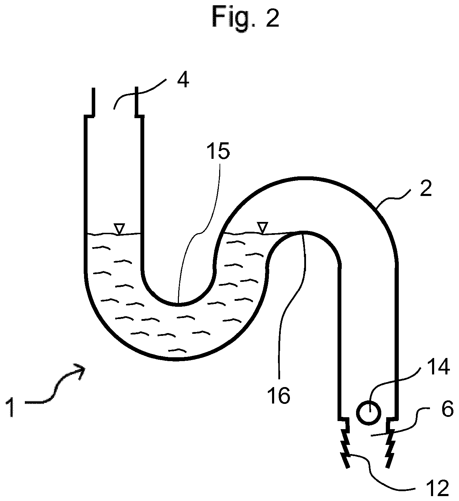

Figur 2 zeigt einen S-förmigen Siphon 1 mit einem Kondensatbehälter 2 in Form eines gedrehten S mit einem Kondensatzulauf 4 und einem Kondensatablauf 6. Da die Oberkante 15 der niedrigsten Stelle der Flüssigkeitsführung niedriger positioniert ist als die Unterkante 16 der höchsten Stelle der Flüssigkeitsführung, staut sich Kondensat. Im Kondensatablauf 6 ist eine Entlüftungsvorrichtung 14 aus porösem Sinterkunststoff angeordnet.

### Bezugszeichenliste

- 1: Kondensatsiphon
- 2: Kondensatbehälter
- 3: Schwimmer
- 4: Kondensatzulauf
- 5: Steigrohr
- 6: Kondensatablauf
- 7: Dichtfläche
- 8: Mündung
- 9: Spalt
- 11: Anschlagbolzen
- 12: Wellrohrverrastung
- 13: Wellrohr
- 14: Entlüftungsvorrichtung
- 15: Oberkante der niedrigsten Stelle der Flüssigkeitsführung
- 16: Unterkante der höchsten Stelle der Flüssigkeitsführung

## Patentansprüche

1. Siphon (1) zur Abführung von bei der Abkühlung des Abgases entstehenden Kondensat bei Heizgeräten mit Brennwertnutzung, wobei nämlich das Kondensat bei der Abkühlung des Abgases aus dem enthaltenen Wasserdampf entsteht, mit einem festen Kondensatbehälter (2), in dem eine Flüssigkeitsführung vorhanden ist, wobei die Flüssigkeitsführung einen Kondensatzulauf (4) und einen Kondensatablauf (6) aufweist, wobei die Flüssigkeitsführung eine vertikale Umlenkung besitzt, wobei die Oberkante (15) der niedrigsten Stelle der Flüssigkeitsführung niedriger als die Unterkante (16) der höchsten Stelle der Flüssigkeitsführung angeordnet ist, wobei der Kondensatablauf (6) zumindest in einem Teilbereich eine Entlüftungsvorrichtung (14) besitzt, über die gegenüber der Umgebung durch eine Gasströmung ein Druckausgleich erfolgen kann, **dadurch gekennzeichnet, dass** die Entlüftungsvorrichtung (14) aus porösem Sinterkunststoff hergestellt ist.

2. Siphon nach Anspruch 1, **dadurch gekennzeichnet, dass** der porösem Sinterkunststoff der Entlüftungsvorrichtung (14) aus porösem Sinterpolyethylen und / oder Sinterpolypropylen besteht.

3. Siphon nach einem der Ansprüche 1 bis 2, **dadurch gekennzeichnet, dass** der Kondensatablauf (6) im unteren Bereich eine Aufnahme (12) für einen Anschlussschlauch (13) besitzt und die Entlüftungsvorrichtung (14) oberhalb der Aufnahme (12) angeordnet ist.

## Claims

1. Siphon (1) for discharging condensate produced during the cooling of the exhaust gas in heating appliances using calorific value, namely the condensate produced during the cooling of the exhaust gas from the water vapour that is present, comprising a fixed condensate container (2) in which a liquid guide is present, the liquid guide having a condensate inlet (4) and a condensate outlet (6), the liquid guide having a vertical deflection, the upper edge (15) of the lowest point of the liquid guide being arranged lower than the lower edge (16) of the highest point of the liquid guide, the condensate outlet (6) having, at least in a section thereof, a venting device (14) via which pressure can be equalised relative to the surroundings by means of a gas flow, **characterised in that** the venting device (14) is made of porous sintered plastic.

2. Siphon according to claim 1, **characterised in that** the porous sintered plastic of the venting device (14) consists of porous sintered polyethylene and/or sintered polypropylene.

3. Siphon according to any one of claims 1 to 2, **characterised in that** the condensate drain (6) has in the lower region a socket (12) for a connecting hose (13) and the venting device (14) is arranged above the socket (12).

## Revendications

1. Siphon (1) pour l'évacuation de condensat apparaissant lors du refroidissement des gaz d'échappement pour des appareils de chauffage avec condensation, dans lequel à savoir le condensat apparaît lors du refroidissement des gaz d'échappement de la vapeur d'eau contenue, avec un récipient de condensat (2) fixe, dans lequel un guidage de liquide est présent, dans lequel le guidage de liquide présente une amenée de condensat (4) et une évacuation de condensat (6), dans lequel le guidage de liquide possède une déviation verticale, dans lequel l'arête supérieure (15) du point le plus bas du guidage de liquide est agencée plus bas que l'arête inférieure (16) du point le plus haut du guidage de liquide, dans lequel l'évacuation de condensat (6) possède au moins dans une zone partielle un dispositif de ventilation (14), par le biais duquel une compensation de pression peut être effectuée par rapport à l'environnement par un courant de gaz, **caractérisé en ce que** le dispositif de ventilation (14) est fabriqué en matière plastique fritée poreuse.

2. Siphon selon la revendication 1, **caractérisé en ce que** la matière plastique frittée poreuse du dispositif de ventilation (14) se compose de polyéthylène fritté poreux et/ou de polypropylène fritté.

3. Siphon selon l'une quelconque des revendications 1 à 2, **caractérisé en ce que** l'évacuation de condensat (6) possède dans la zone inférieure un logement (12) pour un tuyau de raccordement (13) et le dispositif de ventilation (14) est agencé au-dessus du logement (12).
